## Europäisches Patentamt
## European Patent Office
## Office européen des brevets

(19)

(11) Veröffentlichungsnummer: **0 155 402**
**B1**

(12) **EUROPÄISCHE PATENTSCHRIFT**

(45) Veröffentlichungstag der Patentschrift:
02.09.87

(51) Int. Cl.⁴: **B 23 B 31/04**

(21) Anmeldenummer: **84116181.3**

(22) Anmeldetag: **22.12.84**

(54) Schlagbohreinrichtung.

(30) Priorität: **18.02.84 DE 3405980**

(43) Veröffentlichungstag der Anmeldung:
**25.09.85 Patentblatt 85/39**

(45) Bekanntmachung des Hinweises auf die Patenterteilung:
**02.09.87 Patentblatt 87/36**

(84) Benannte Vertragsstaaten:
**CH FR GB IT LI**

(56) Entgegenhaltungen:
**EP-A-0 055 244**
**CH-A-583 845**
**DE-A-3 132 449**
**DE-B-1 116 172**
**GB-A-2 136 725**
**US-A-1 592 851**

(73) Patentinhaber: **Röhm, Günter Horst, Heinrich-Röhm- Strasse 50, D-7927 Sontheim (DE)**

(72) Erfinder: **Röhm, Günter Horst, Heinrich- Röhm-Strasse 50, D-7927 Sontheim (DE)**

(74) Vertreter: **Fay, Hermann, Dipl.- Phys. Dr., Ensingerstrasse 21 Postfach 1767, D-7900 Ulm (Donau) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft eine Schlagbohreinrichtung mit einem von einer Schlagbohrspindel drehschlüssig angetriebenen Bohrfutter, das axial verschieblich auf der Schlagbohrspindel geführt ist und einen axialen Durchgang aufweist, durch den hindurch die Schlagwirkung von der Schlagbohrspindel auf das Ende des im Bohrfutter zwischen zentrisch verstellbaren Futterbacken gehaltenen Bohrers übertragbar ist.

Bei einer aus der DE-OS 31 32 449 bekannten Schlagbohreinrichtung dieser Art besitzt die Schlagbohrspindel eine Querausnehmung, die von einem im Futterkörper festen Bolzen durchgriffen ist. Die Querausnehmung ist in Axialrichtung der Schlagbohrspindel etwas länger als der Bolzen dick ist, so daß die vom Bolzen bewirkte Verbindung drehfest ist, jedoch ein bestimmtes axiales freies Spindelspiel ermöglicht, das für die Übertragung der Schlagwirkung der Schlagbohrspindel auf den im Bohrfutter gehaltenen Bohrer erforderlich ist. So lange der Bohrer während des Schlagbohrens einen ausreichend großen Widerstand an der Bohrstelle findet, ist der Weg seiner eigenen axialen Schlagbewegung wie auch der der Schlsgbohrspindel kleiner als das durch den Bolzen ermöglichte freie Spindelspiel. Findet der Bohrer aber nur geringen oder gar keinen Widerstand, wird der Schlaghub größer und ein erheblicher Teil der Schlagenergie überträgt sich von der Schlagbohrspindel direkt auf das Bohrfutter, indem die Schlagbohrspindel mit den axialen Enden ihrer Querausnehmung auf den Bolzen trifft. Dies kann auf die Dauer zu Beschädigungen am Bohrfutter führen und die Halterung des Bohrers im Bohrfutter beeinträchtigen, insbes. dann, wenn Bohrer mit glattem Schaft zum Einsatz kommen sollen, die also nicht wie für die bekannte Schlagbohreinrichtung im Bohrerschaft Ausnehmungen aufweisen, die ein Verriegeln des Bohrers im Bohrfutter ermöglichen.

Der Erfindung liegt die Aufgabe zugrunde, eine Schlagbohreinrichtung der eingangs genannten Art so auszubilden, daß unter Beibehaltung des Spindelspiels bei größeren Hubwegen der Schlagbohrspindel die Schlagenergie so am Bohrfutter abgefedert und gedämpft wird, daß zu harte Beanspruchungen des Bohrfutters vermieden werden.

Diese Aufgabe wird nach der Erfindung dadurch gelöst, daß das Bohrfutter mit der Schlagbohrspindel durch Getriebeglieder verbunden ist, die durch axiale Relativbewegungen zwischen Bohrfutter und Schlagbohrspindel radial gegen mindestens ein in dieser Richtung spannbares Federglied des Bohrfutters verstellbar sind, wobei in der Ankopplung der Getriebeglieder an die Schlagbohrspindel ein axiales freies Spindelspiel vorgesehen ist.

Bei der erfindungsgemäßen Schlagbohreinrichtung verstellt die Schlagbohrspindel, wenn ihr Weg das vorgesehene freie Spindelspiel überschreitet, die Getriebeglieder und spannt damit zunehmend das mit im wesentlichen radialem Federweg ausgebildete und angeordnete Federglied, so daß die Schlagbohrspindel eine Bremskraft erfährt und die Übertragung der freien Schlagenergie von der Schlagbohrspindel auf das Bohrfutter weich ohne harte Schläge erfolgt. Die dabei stattfindende Bewegungsumlenkung aus der axialen in die radiale Richtung ermöglicht eine kurze axiale Baulänge des erfindungsgemäßen Bohrfutters bei gleichzeitig weitgehender Freiheit in der Gestaltung des Federgliedes, das bezüglich Federsteifigkeit, Federkraft, Federweg und Dämpfungsverhalten optimal ausgelegt werden kann. Es kann eine werkstoffbedingte innere Eigendämpfung besitzen oder mit zusätzlichen Dämpfungsgliedern versehen sein, abgesehen von dem ohnehin stattfindenden Energieverzehr durch Reibung auf dem Übertragungsweg von der Schlagbohrspindel über die Getriebeglieder zum Federglied.

Eine bevorzugte Ausführungsform der Erfindung ist dadurch gekennzeichnet, daß die Getriebeglieder als radial im Futterkörper verschieblich geführte und gegen das Federglied abgestützte Schubstücke ausgebildet sind, die mit einem Stellkopf in eine Stellausnehmung an der Schlagbohrspindel greifen, wobei an axial beiden Enden des Stellkopfes und der Stellausnehmung einander zugeordnete, bei Anlage aneinander die Axialbewegung der Schlagbohrspindel in auswärts gerichtete Radialbewegung des Schubstückes umsetzende Getriebeflächen angeordnet sind, zwischen welchen das freie Spindelspiel vorgesehen ist. Im Prinzip bilden dabei die Getriebeflächen ein Keilgetriebe, wobei über die Wahl der Keilwinkel noch die Möglichkeit einer Kraft- bzw. Wegübersetzung besteht. Zweckmäßig greifen die Stellköpfe in Drehrichtung der Schlagbohrspindel formschlüssig in die Stellausnehmungen, so daß von den Schubstücken zugleich auch die Drehmitnahme zwischen der Schlagbohrspindel und dem Bohrfutter bewirkt wird. Das Federglied kann mit den Getriebegliedern zu einheitlichen Bauteilen integriert sein, indem beispielsweise die Schubstücke selbst aus einem elastisch federnden Werkstoff wie Gummi oder dergl. bestehen. Bevorzugt aber im Rahmen der Erfindung ist ein gegenüber den Getriebegliedern selbständiges Federglied in Form eines den Futterkörper außen umgebenden geschlossenen Federrings. Gegen den Federring können alle Schubstücke abgestützt werden, wobei die Federkraft durch Verformung des Federringes aus der Kreisgestalt und durch geringfügige Dehnung entsteht. Ein solches Federglied besitzt eine hohe Kraftsteifigkeit und gewährleistet gleich große Abstützkraft an allen Schubstücken. - Ersichtlich kann dank der keilartig wirkenden Getriebeflächen die Größe des freien Spindelspiels in einfacher Weise dadurch geändert werden, daß die Schubstücke mehr oder weniger weit gegen die Schlagbohrspindel angestellt werden und also die Stellköpfe mehr oder weniger tief in die Stellausnehmungen eingreifen. Diese Eingrifftiefe kann nach einem weiteren Vorschlag der Erfindung in einfacher Weise mit Hilfe des ringförmigen Federgliedes eingestellt werden. Dazu ist erfindungsgemäß vorgesehen, daß das ringförmige Federglied drehbar am Futterkörper gelagert und an seiner Innenseite mit verschieden tiefen Aufnahmen für die Schubstücke versehen ist, wobei die tiefste Aufnahme den völligen Austritt des Stellkopfes aus der Stellausnehmung ermöglicht und in der flachsten oder überhaupt fehlenden Aufnahme das Federglied den Stellkopf so tief in der Stellausnehmung hält, daß die einander zugeordneten Getriebeflächen aneinander liegen und das freie Spindelspiel aufgehoben ist. Letzteres ist beispielsweise dann erwünscht, wenn nur drehend gebohrt wird, da dann das freie Spindelspiel am Bohrfutter stören würde. Der völlige Austritt der Stellköpfe aus den Stellausnehmungen ermöglicht es, das Bohrfutter von der Schlagbohrspindel abzunehmen und auszuwechseln. Um die Drehstellungen des Federgliedes auf dem Futterkörper zu fixieren, besteht im übrigen die Möglichkeit, die dem Federglied zugewandten Enden der Schubstücke mit federnden Rastgliedern zu versehen, die in Rastöffnungen am Federglied eingreifen, welche den verschiedenen Aufnahmen für die Schubstücke zugeordnet sind. Diese Rastglieder können auch dazu dienen, die axiale Lage des Federgliedes dadurch festzulegen, daß die Rastöffnungen am Federglied durch eine in Umfangsrichtung verlaufende Nut auf der Innenseite des Federgliedes verbunden sind und daß in diese Nuten die Rastglieder passen. Besondere Maßnahmen zur axialen Sicherung des Federgliedes am Futterkörper werden dadurch entbehrlich.

Im folgenden wird die Erfindung an in der Zeichnung dargestellten Ausführungsbeispielen näher erläutert; es zeigen:

Fig. 1 einen Axialschnitt durch eine Schlagbohreinrichtung nach der Erfindung,

Fig. 2 einen Schnitt in Richtung II - II durch den Gegenstand der Fig. 1,

Fig. 3 einen Axialschnitt durch eine andere Ausführungsform einer erfindungsgemäßen Schlagbohreinrichtung,

Fig. 4 einen Schnitt in Richtung IV - IV durch den Gegenstand der Fig. 3.

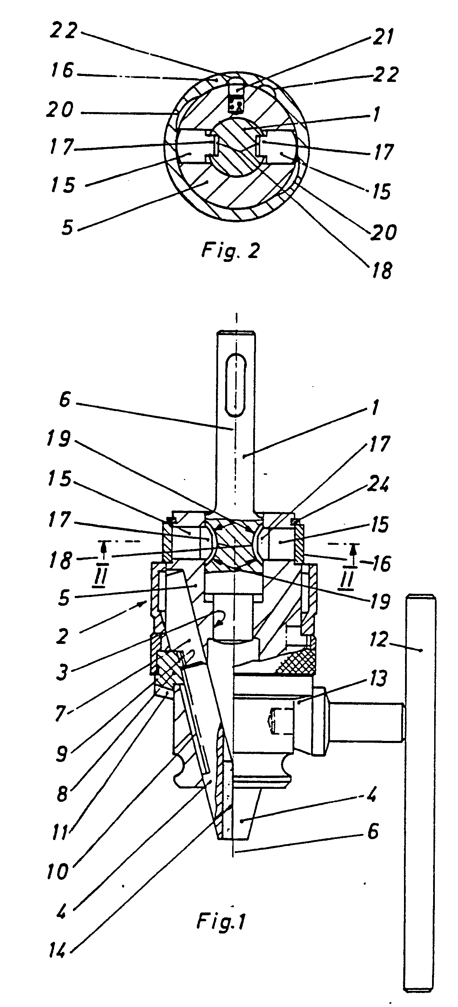

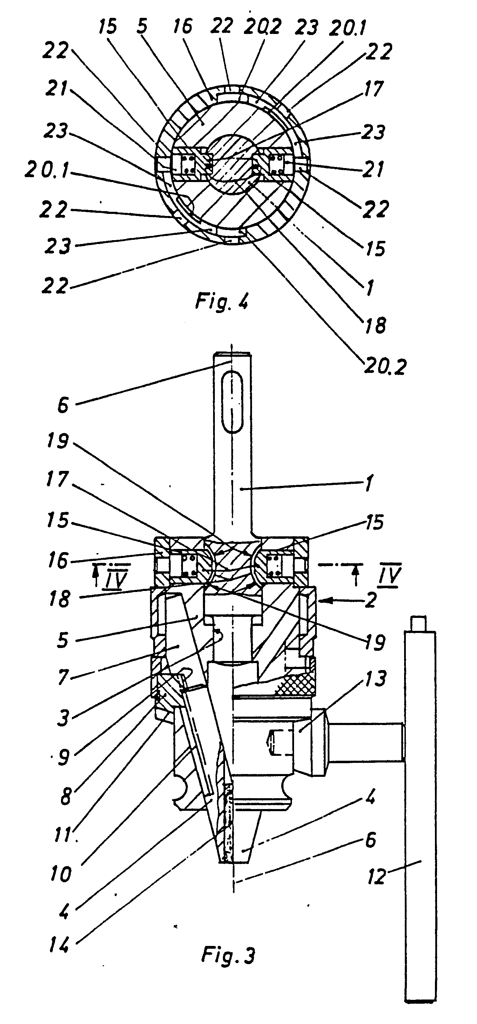

Bei den in der Zeichnung dargestellten Schlagbohreinrichtungen ist die Schlagbohrspindel mit 1, das von der Schlagbohrspindel angetriebene Bohrfutter mit 2 bezeichnet. Das Bohrfutter ist mit einem axialen Durchgang 3 versehen, durch den hindurch die Schlagwirkung von der Schlagbohrspindel 1 auf das Ende eines im Bohrfutter 2 zwischen zentrisch verstellbaren Futterbacken 4 gehaltenen, in der Zeichnung nicht dargestellten Bohrers übertragen wird. Die Futterbacken 4 sind im Futterkörper 5 in zur Futterachse 6 geneigten Backenführungen 7 verstellbar. Ihre Verstellung erfolgt mit Hilfe eines Stellrings 8, der am Futterkörper 5 drehbar gelagert ist und mit einem Innengewinde 9 in eine Verzahnung 10 der Futterbacken 4 greift. Der Stellring 8 besitzt im übrigen eine Außenverzahnung 11, die bei am Bohrfutter 2 angesetztem Spannschlüssel 12 in das Zahnritzel 13 des Spannschlüssels greift, so daß durch Drehen des Spannschlüssels 12 das Bohrfutter 2 über den Stellring 8 geschlossen oder geöffnet werden kann. Die Halterung des nicht dargestellten Bohrers zwischen den Futterbacken 4 erfolgt in der Weise, daß sich an den Backenstirnseiten vorgesehene Hartmetallschneiden 14 unter der Wirkung der Spannkraft und der Bohrkräfte geringfügig so in den Bohrerschaft einarbeiten, daß der Bohrer zwar drehfest, aber mit einem geringen axialen Spiel zwischen den Futterbacken 4 gehalten ist. Der Futterkörper 5 ist mit der Schlagbohrspindel 1 durch Getriebeglieder in Form von radial im Futterkörper 5 geführten Schubstücken 15 verbunden, die durch axiale Relativbewegungen zwischen dem Futterkörper 5 und der Schlagbohrspindel 1 radial gegen ein in dieser Richtung spannbares Federglied 16 des Bohrfutters 2 verstellbar sind, wobei das Federglied 16 als ein den Futterkörper 5 außen umgebender geschlossener Federring ausgebildet ist. Die Ankopplung der radial am Federglied 16 abgestützten Schubstücke 15 an die Schlagbohrspindel 1 ermöglicht dieser ein geringfügiges axiales freies Spindelspiel gegenüber dem Futterkörper 5. Dazu greifen die Schubstücke 15 mit einem Stellkopf 17 in eine Stellausnehmung 18 an der Schlagbohrspindel 1. An beiden axialen Enden des Stellkopfes 17 und der Stellausnehmung 18 sind einander zugeordnete, bei Anlage aneinander die Axialbewegung der Schlagbohrspindel 1 in auswärts gerichtete Radialbewegung des Schubstückes 15 umsetzende Getriebeflächen 19 angeordnet, die in den Ausführungsbeispielen im wesentlichen ein Keilflächengetriebe bilden. Zwischen diesen Getriebeflächen 19 ist das freie Spindelspiel vorgesehen, dessen Größe somit davon abhängt, wie tief die Stellköpfe 17 in die Stellausnehmungen 18 tatsächlich vorstehen. Um diese Eingrifftiefe einstellen zu können, ist das Federglied 16 drehbar am Futterkörper 5 gelagert und an seiner Innenseite mit Aufnahmen 20, für die Schubstücke 15 versehen. Im Ausführungsbeispiel nach den Fig. 1 und 2 ist je Schubstück 15 nur eine solche Aufnahme 20 vorgesehen. Wird das Federglied 16 so verdreht, daß die Schubstücke 15 in die Aufnahmen 20 eintreten können, treten entsprechend die Stellköpfe 17 vollständig aus den Stellausnehmungen 18 aus und das Spannfutter 2 kann von der Schlagbohrspindel 1 abgenommen werden. Im Ausführungsbeispiel nach den Fig. 3 und 4 sind dagegen zwei verschieden tiefe Aufnahmen 20. 1 und 20. 2 vorgesehen. Die tiefste Aufnahme 20.2 ermöglicht den völligen Austritt des Stellkopfes 17 aus der Stellausnehmung 18 und damit wiederum ein Abnehmen des Bohrfutters 2 von der Schlagbohrspindel 1. Dort dagegen, wo eine Aufnahme überhaupt fehlt, also in der in Fig. 4 gezeigten Stellung, hält das Federglied 16 den Stellkopf 17 so tief in der Stellausnehmung 18, daß die einander zugeordneten Getriebeflächen 19 aneinander liegen und dadurch das freie Spindelspiel aufgehoben ist. Diese Stellung empfiehlt sich für rein drehendes Bohren. Die in der Mitte liegende Aufnahme 20. 1 ist zum Schlagbohren bestimmt. Befinden sich die Schubstücke 15 in dieser Aufnahme 20.1, ist das zum Schlagbohren erwünschte Spindelspiel vorhanden. Im übrigen greifen die Stellköpfe 17, soweit sie die Schlagbohrspindel 1 nicht völlig freigeben, immer in Drehrichtung der Schlagbohrspindel 1 formschlüssig in die Stellausnehmungen 18, wodurch die drehschlüssige Verbindung zwischen Schlagbohrspindel 1 und Bohrfutter 2 bewirkt wird. Um das Federglied 16 in seiner jeweiligen Drehstellung zu fixieren, können federnde Rastglieder 21 zwischen dem Futterkörper 5 und dem Federglied 16 vorgesehen sein. Im Ausführungsbeispiel nach den Fig. 3 und 4 befinden sich diese federnden Rastglieder 21 in den dem Federglied 16 zugewandten Enden der Schubstücke 15. Sie greifen in Rastöffnungen 22 am Federglied 16, welche den verschiedenen Aufnahmen 20, 20.1, 20.2 für die Schubstücke 15 zugeordnet sind. Im übrigen sind in Fig. 4 die im Zusammenhang mit jeweils einem Schubstück 15 vorgesehenen Aufnahmen 20, 20. 1, 20. 2 und Rastöffnungen 22 am Federglied 16 durch eine in Umfangsrichtung verlaufende Nut 23 auf der Innenseite des Federgliedes 16 verbunden. In diese Nuten 23 passen die Rastglieder 21 und sichern so das Federglied 16 bezüglich seiner axialen Lage auf dem Futterkörper 5. Im Ausführungsbeispiel nach den Fig. 1 und 2 bedarf es zu dieser Sicherung des Sprengringes 24.

**Patentansprüche**

1. Schlagbohreinrichtung mit einem von einer Schlagbohrspindel (1) drehschlüssig angetriebenen Bohrfutter (2), das axial verschieblich auf der Schlagbohrspindel (1) geführt ist und einen axialen Durchgang (3) aufweist, durch den hindurch die Schlagwirkung von der Schlagbohrspindel (1) auf das Ende des im Bohrfutter (2) zwischen zentrisch verstellbaren Futterbacken (4) gehaltenen Bohrers übertragbar ist, dadurch gekennzeichnet, daß das Bohrfutter (2) mit der Schlagbohrspindel (1) durch Getriebeglieder (15) verbunden ist, die durch axiale Relativbewegungen zwischen Bohrfutter (2) und Schlagbohrspindel (1) radial gegen mindestens ein in dieser Richtung spannbares Federglied (16) des Bohrfutters (2) verstellbar sind, wobei in der Ankopplung der Getriebeglieder an die Schlagbohrspindel (1) ein axial freies Spindelspiel vorgesehen ist.

2. Schlagbohreinrichtung nach Anspruch 1, dadurch gekennzeichnet, daß die Getriebeglieder als radial im Futterkörper (5) verschieblich geführte und gegen das Federglied (16) abgestützte Schubstücke (15) ausgebildet sind, die mit einem Stellkopf (17) in eine Stellausnehmung (18) an der Schlagbohrspindel (1) greifen, wobei an axial beiden Enden des Stellkopfes (17) und der Stellausnehmung (18) einander zugeordnete, bei Anlage aneinander die Axialbewegung der Schlagbohrspindel (1) in auswärts gerichtete Radialbewegung des Schubstückes (15) umsetzende Getriebeflächen (19) angeordnet sind, zwischen welchen das freie Spindelspiel vorgesehen ist.

3. Schlagbohreinrichtung nach Anspruch 2, dadurch gekennzeichnet, daß die Stellköpfe (17) in Drehrichtung der Schlagbohrspindel (1) formschlüssig in die Stellausnehmungen (18) greifen.

4. Schlagbohreinrichtung nach einem der Ansprüche 1 bis 3, dadurch gekennzeichnet, daß das Federglied (16) ein den Futterkörper (5) außen umgebender geschlossener Federring ist.

5. Schlagbohreinrichtung nach den Ansprüchen 2 bis 4, dadurch gekennzeichnet, daß das ringförmige Federglied (16) drehbar am Futterkörper (5) gelagert und an seiner Innenseite mit verschieden tiefen Ausnahmen (20, 20. 1, 20. 2) für die Schubstücke (15) versehen ist, wobei die tiefste Aufnahme (20.2) den völligen Austritt des Stellkopfes (17) aus der Stellausnehmung (18) ermöglicht und in der flachsten oder überhaupt fehlenden Aufnahme das Federglied (16) den Stellkopf (17) so tief in der Stellausnehmung (18) hält, daß die einander zugeordneten Getriebeflächen (19) aneinander liegen und das freie Spindelspiel aufgehoben ist.

6. Schlagbohreinrichtung nach Anspruch 5, dadurch gekennzeichnet, daß die dem Federglied (16) zugewandten Enden der Schubstücke (15) federnde Rastglieder (21) aufweisen, die in Rastöffnungen (22) am Federglied (16) eingreifen, welche den verschiedenen Aufnahmen (20, 20.1, 20.2) für die Schubstücke (15) zugeordnet sind.

7. Schlagbohreinrichtung nach Anspruch 6, dadurch gekennzeichnet, daß die Rastöffnungen (22) am Federglied (16) durch eine in Umfangsrichtung verlaufende Nut (23) auf der Innenseite des Federgliedes (16) verbunden sind und daß in diese Nuten (23) die Rastglieder (21) passen.

**Claims**

1. A hammer drilling apparatus comprising a drilling chuck (2) which is driven by a hammer drilling spindle (1) non-rotatably relative thereto and which is axially displaceably guided on the hammer drilling spindle (1) and which has an axial through passage (3) through which the hammer action can be transmitted from the hammer drilling spindle (1) on to the end of the drill which is held in the drilling chuck (2) between concentrically displaceable chuck jaws (4) characterised in that the drilling chuck (2) is connected to the hammer drilling spindle (1) by transmission members (15) which, by axial relative movement between the drilling chuck (2) and the hammer drilling spindle (1), are displaceable radially against at least one spring member (16) of the drilling chuck, which can be stressed in said direction, wherein an axially free spindle play is provided in the coupling of the transmission members to the hammer drilling spindle (1).

2. A hammer drilling apparatus according to claim 1 characterised in that the transmission members are in the form of thrust portions (15) which are radially displaceably guided in the chuck body (5) and which are supported against the spring member (16) and which engage with an adjusting head (17) into an adjusting recess (18) on the hammer drilling spindle (1), wherein disposed at both axial ends of the adjusting head (17) and the adjusting recess (18) are mutually associated transmission surfaces (19) which when they bear against each other convert the axial movement of the hammer drilling spindle (1) into an outwardly directed radial movement of the thrust portion (15), the free spindle play being provided between said drive surfaces.

3. A hammer drilling apparatus according to claim 2 characterised in that the adjusting heads (17) engage into the adjusting recesses (18) positively in the direction of rotation of the hammer drilling spindle (1).

4. A hammer drilling apparatus according to one of claims 1 to 3 characterised in that the spring member (16) is a closed spring ring which embraces the chuck body (5) on the outside thereof.

5. A hammer drilling apparatus according to claims 2 to 4 characterised in that the annular spring member (16) is mounted rotatably on the chuck body (5) and is provided at its inside with recess means (20, 20.1, 20.2) of different depths for receiving the thrust portions (15), wherein the deepest recess means (20.2) permits the adjusting head (17) to come completely out of the adjusting recess (18) and in the shallowest recess means or where there is no recess means at all, the spring member (16) holds the adjusting head (17) so deep in the adjusting recess (18) that the mutually associated transmission surfaces (19) lie against each other and the free spindle play is eliminated.

6. A hammer drilling apparatus according to claim 5 characterised in that the ends of the thrust portions (15) which are towards the spring member (16) have resilient retaining members (21) which engage into retaining openings (22) on the spring memher (16), which are associated with the various recess means (20, 20.1, 20.2) for the thrust portions (15).

7. A hammer drilling apparatus according to claim 6 characterised in that the retaining openings (22) on the spring member (16) are connected by a peripherally extending groove (23) on the inside of the spring member (16) and that the retaining members (21) fit into said grooves (23).

**Revendications**

1. Perforatrice à percussion, avec un mandrin de serrage (2) entraîné en rotation par une broche de perçage à percussion (1), qui est guidé de manière mobile dans le sens axial sur la broche de perçage à percussion (1) et présente un passage axial (3) par lequel le mouvement de percussion peut être transmis de la broche de perçage à percussion (1) à l'extrémité du foret maintenu dans le mandrin de serrage (2), entre les mâchoires de serrage (4) pouvant être déplacées concentriquement, caractérisée par le fait que le mandrin de serrage (2) est relié à la broche de perçage à percussion (1) par des organes d'entraînement (15) qui, par l'intermédiaire de mouvements relatifs axiaux entre le mandrin de serrage (2) et la broche de perçage à percussion (1), peuvent être déplacés radialement par rapport à au moins un organe élastique (16) du mandrin de serrage (2) pouvant être tendu dans cette direction, un libre jeu axial de la broche étant prévu dans l'accouplement des organes d'entraînement avec la broche de perçage à percussion (1).

2. Perforatrice à percussion selon la revendication 1, caractérisée par le fait que les organes d'entraînement sont conformés en éléments pousseurs (15) guidés de manière mobile dans le sens radial dans le corps du mandrin (5) et s'appuyant sur l'organe élastique (16), qui s'engagent avec une tête de réglage (17) dans un évidement de réglage (18) sur la broche de perçage à percussion (1), les deux extrémités axiales de la tête de réglage (17) et de l'évidement de réglage (18) présentant des surfaces d'entraînement (19) associées qui, lorsqu'elles sont en contact, transforment le mouvement axial de la broche de perçage à percussion (1) en un mouvement de l'élément pousseur (15) dirigé radialement vers l'extérieur, le libre jeu de la broche étant prévu entre lesdites surfaces d'entraînement.

3. Perforatrice à percussion selon la revendication 2, caractérisée par le fait que les têtes de réglage (17) s'engagent positivement, dans le sens de rotation de la broche de perçage à percussion (1), dans les évidements de réglage (18).

4. Perforatrice à percussion selon l'une quelconque des revendications 1 à 3, caractérisée par le fait que l'organe élastique (16) est une rondelle élastique fermée qui entoure extérieurement le corps du mandrin (5).

5. Perforatrice à percussion selon l'une quelconque des revendications 2 à 4, caractérisée par le fait que l'organe élastique (16) circulaire est monté sur le corps du mandrin (5) de façon à pouvoir tourner et qu'il comporte à sa face intérieure des logements (20, 20.1, 20.2) de différentes profondeurs pour les éléments pousseurs (15), le logement le plus profond (20.2) permettant la sortie complète de la tête de réglage (17) hors de l'évidement de réglage (18) et l'organe élastique (16) maintenant la tête de réglage (17), dans le logement le plus plat ou, en l'absence totale de logements, profondément dans l'évidement de réglage (18) de telle façon que les surfaces d'entraînement associées (19) sont en contact les unes avec les autres et que le libre jeu de la broche est supprimé.

6. Perforatrice à percussion selon la revendication 5, caractérisée par le fait que les extrémités des éléments pousseurs (15) dirigées vers l'organe élastique (16) sont munies d'éléments de crantage élastiques (21) qui s'engagent dans des encoches d'arrêt (22) prévues sur l'organe élastique (16) et associées aux différents logements (20, 20.1, 20.2) pour les éléments pousseurs (15).

7. Perforatrice à percussion selon la revendication 6, caractérisée par le fait que les encoches d'arrêt (22) sur l'organe élastique (16) sont reliées par une encoche circonférentielle (23) à la face intérieure de l'organe élastique (16) et que les éléments de crantage (21) sont adaptés à ces encoches (23).

Fig. 2

Fig.1

0 155 402

Fig. 4

Fig. 3

3